Europäisches Patentamt

European Patent Office

Office européen des brevets

(11) Numéro de publication: **0 410 859 A2**

## DEMANDE DE BREVET EUROPEEN

(21) Numéro de dépôt: 90402101.1

(22) Date de dépôt: 20.07.90

(51) Int. Cl.5: **G03B 21/64**

(30) Priorité: 26.07.89 FR 8910090

(43) Date de publication de la demande:
30.01.91 Bulletin 91/05

(84) Etats contractants désignés:
DE ES GB IT NL

(71) Demandeur: **Ruellan, Yves**
**67, rue Perronet**
**F-92200 Neuilly sur Seine(FR)**

(72) Inventeur: **Ruellan, Yves**
**67, rue Perronet**
**F-92200 Neuilly sur Seine(FR)**

(74) Mandataire: **Netter, André et al**
**Cabinet NETTER, 40, rue Vignon**
**F-75009 Paris(FR)**

(54) Dispositif de maintien d'une pellicule porteuse d'une image à projeter.

(57) L'invention concerne un dispositif de maintien d'une pellicule (20) porteuse d'une image à projeter comportant une rangée de perforations (30) sur chacun d'au moins deux bords opposés. Le dispositif comprend deux demi-caches périphériques (22) entre lesquels est immobilisée la pellicule (20) par pénétration de saillies (37, 39) et cavités (38, 41) conjuguées que présentent les deux demi-caches, lesdites saillies et cavités étant disposées en correspondance des perforations (30) de la pellicule (20) pour que lesdites saillies (37, 39) pénètrent dans lesdites perforations (30) et maintiennent ainsi la pellicule (20) sur ses bords.

FIG.5

# DISPOSITIF DE MAINTIEN D'UNE PELLICULE PORTEUSE D'UNE IMAGE À PROJETER

L'invention concerne un dispositif de maintien d'une pellicule porteuse d'une image à projeter.

La projection des pellicules de ce genre, encore appelées "diapositives", pose des problèmes de plus en plus aigus au fur et à mesure que la protection a lieu à une plus grande distance du projecteur et qu'augmente la dimension de l'image projetée. Il faut en effet faire appel à un projecteur d'une puissance de plus en plus grande et la température qui règne au voisinage du projecteur, où se trouve la diapositive à projeter, devient très élevée, ce qui pose des problèmes d'échauffement et de déformation de la diapositive.

Cet échauffement varie avec le flux lumineux du projecteur, l'opacité de la diapositive et la vitesse de l'air de refroidissement envoyé contre la diapositive par les moyens de ventilation du projecteur.

Pour surmonter cet inconvénient, la solution adoptée jusqu'à présent, a consisté à placer la pellicule dans une monture comportant deux plaques de verre qui empêchent la déformation de la diapositive. Cette solution convient pour les projecteurs de faible puissance, mais elle est difficilement utilisable avec les projecteurs de grande puissance.

En effet, d'une part, une condensation importante apparaît rapidement sur la diapositive et, d'autre part, le courant d'air de refroidissement perd son efficacité, du fait que la diapositive est isolée par les deux plaques de verre. De plus cette solution a pour inconvénient d'entraîner une perte de lumière qui est de l'ordre de deux fois 10%.

Ainsi, on a constaté que, malgré les moyens mis en oeuvre, une diapositive s'altère relativement rapidement et la projection perd de sa qualité. Après un certain temps, les détériorations que subit la diapositive du fait de la haute température à laquelle elle est soumise rendent celle-ci inutilisable.

On a cru pendant longtemps, et on croit encore en raison de l'aspect que prend la diapositive, que celle-ci se dilate du fait de la température et on a mis les ondulations que présente une diapositive usagée sur le compte d'une telle dilatation.

Or, en fait, la plupart des diapositives sont en une pellicule qui se contracte au fur et à mesure que la température augmente.

C'est sur cette constatation qu'est basée la présente invention et également sur le fait que les diapositives (pellicules 35 mm) comportent des perforations sur deux côtés, à savoir sur leurs bords longitudinaux.

L'invention concerne plus particulièrement un dispositif de maintien d'une pellicule porteuse d'une image à projeter comportant une rangée de perforations sur chacun d'au moins deux bords opposés.

Selon une caractéristique essentielle de l'invention, ce dispositif comprend deux demi-caches périphériques entre lesquels est immobilisée la pellicule par pénétration de saillies et cavités conjuguées que présentent les demi-caches, lesdites saillies et cavités étant disposées en correspondance des perforations de la pellicule pour que lesdites saillies pénètrent dans lesdites perforations et maintiennent ainsi la pellicule sur ses bords.

La pellicule est ainsi maintenue entre les deux demi-caches périphériques par la pénétration des saillies des demi-caches, l'emplacement des saillies et cavités conjuguées correspondant exactement à celui des perforations d'une pellicule.

Du fait que la pellicule est maintenue par les saillies et cavités des demi-caches, la chaleur créée par le flux lumineux du projecteur contracte la diapositive et la tend, assurant ainsi le maintien de sa planéité.

Par conséquent, il n'est plus nécessaire de faire appel à des plaques transparentes de verre ou analogue qui, jusqu'à présent étaient prévues précisément pour conserver à la pellicule une certaine planéité.

On évite de ce fait les inconvénients inhérents à l'utilisation de telles plaques : réduction de l'effet de refroidissement et perte d'énergie lumineuse.

Dans une forme de réalisation préférée de l'invention, les saillies sont des picots circulaires et les cavités sont des perforations circulaires.

Selon une autre caractéristique de l'invention, le dispositif comprend des moyens de solidarisation des deux demi-caches.

Dans une forme de réalisation de l'invention, les saillies et cavités des demi-caches assurent également la solidarisation des deux demi-caches.

En variante, les moyens de solidarisation des deux demi-caches sont distincts des saillies et cavités et comprennent des nervures et rainures conjuguées prévues sur les deux demi-caches.

Selon un autre aspect, l'invention concerne un demi-cache faisant partie d'un dispositif tel que défini précédemment.

Encore sous un autre aspect, l'invention concerne un appareil de projection comprenant un dispositif de maintien de pellicule comme défini plus haut.

Dans la description qui suit, faite seulement à titre d'exemple, on se réfère aux dessins annexés sur lesquels :

- la figure 1 est une vue de face d'un demi-cache faisant partie du dispositif, pour une forme de réalisation;

- la figure 2 en est une vue de côté;
- la figure 3 est une vue en coupe suivant la ligne III-III de la figure 1;
- la figure 4 est une vue en coupe suivant la ligne IV-IV de la figure 1;
- la figure 5 est une vue en coupe des deux demi-caches constitutifs du dispositif éloignés l'un de l'autre;
- la figure 6 est une vue de face d'un demi-cache constitutif d'un dispositif selon l'invention, pour une autre forme de réalisation;
- la figure 7 est une vue en coupe selon la ligne VII-VII de la figure 6; et
- la figure 8 est une vue analogue à la figure 6, montrant une pellicule maintenue contre le demi-cache.

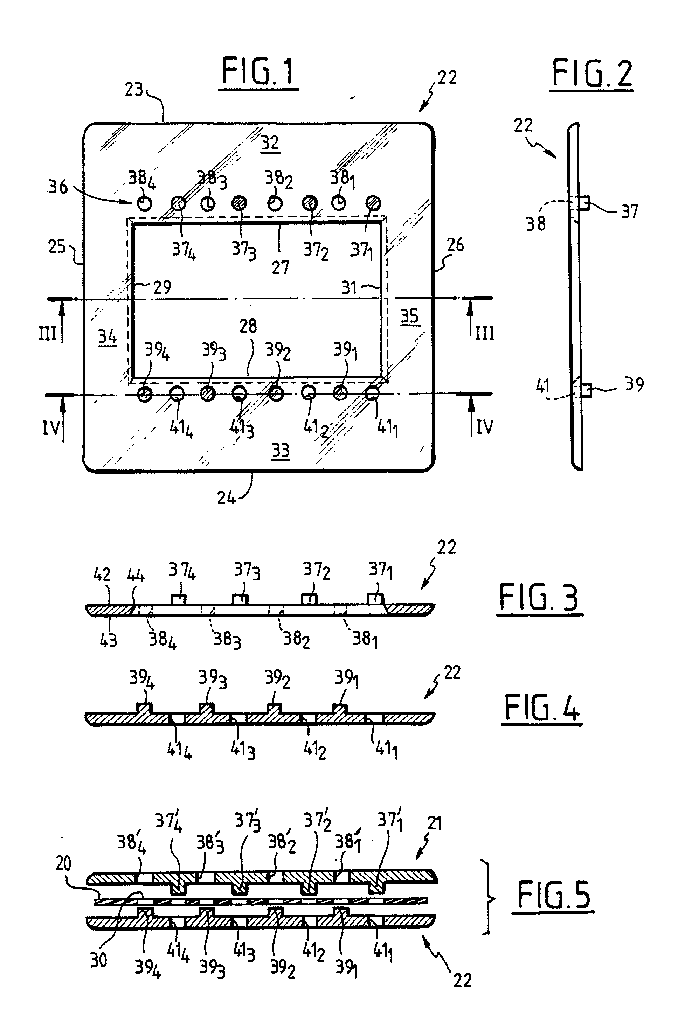

On se réfère d'abord aux figures 1 à 5. Dans cette forme de réalisation, le dispositif de maintien comprend deux cadres ou demi-caches 21 et 22 qui ont la même configuration. Chaque demi-cache, par exemple le demi-cache 22, a un contour extérieur rectangulaire limité par des côtés longitudinaux 23 et 24 et des côtés transversaux 25 et 26 et un contour intérieur également rectangulaire limité par des côtés longitudinaux 27 et 28, respectivement parallèles aux côtés 23 et 24, et des côtés transversaux 29 et 31, respectivement parallèles aux côtés 25 et 26.

Ces côtés délimitent ainsi deux barrettes longitudinales 32 et 33 et deux barrettes transversales 34 et 35.

Sur chacune des barrettes longitudinales 32 et 33 du demi-cache 22 et sur les barrettes identiques du demi-cache 21 sont prévues en succession une rangée longitudinale 36 de picots ou saillies 37 et de perforations ou cavités 38 alternés, au nombre total de huit dans la réalisation représentée, les picots étant référencés 37-1, 37-2, 37-3, 37-4 et les perforations 38-1, 38-2, 38-3, 38-4.

La disposition est la même sur la barrette 33 avec des picots 39 alternant avec des perforations 41.

Le demi-cache 21 est de constitution identique au demi-cache 22, les picots d'une barrette longitudinale étant référencés $37'$-1,...,$37'$-4.

Les picots et les perforations sont cylindriques et les picots du demi-cache supérieur 21 ont un diamètre qui correspond à celui des perforations en regard du demi-cache inférieur 22, de sorte que, lorsque les deux demi-caches sont posés l'un sur l'autre, les picots $37'$ pénètrent pratiquement sans jeu dans les perforations 38 et 41, des barrettes en regard du demi-cache 22, la pellicule 20 à projeter comportant les perforations habituelles 30 ayant été auparavant disposée entre les deux demi-caches.

L'emplacement des picots et perforations conjugués des deux demi-caches correspond à celui des perforations de la pellicule, si bien que les picots pénètrent dans les perforations prévues sur les bords longitudinaux de la pellicule.

La pellicule est ainsi maintenue sur ses bords longitudinaux d'une manière positive de sorte que, lorsque la température de la pellicule augmente, du fait de sa proximité de la source électrique de lumière, elle est mise sous tension par la contraction qui se produit et reste plane. Il n'est donc nul besoin de la maintenir entre deux plaques de verre, comme habituel jusqu'ici, et le flux d'air dont on balaie la pellicule exerce son action le refroidissement directement sur celle-ci et ainsi avec l'efficacité maximale.

Dans la forme de réalisation décrite, les éléments de picots et perforations des barrettes parallèles sont distants de 29 mm et la longueur des côtés transversaux 29 et 31 est de 23 mm. La longueur des côtés 27 et 28 est de 35 mm. L'emplacement des picots et perforations du demi-cache permet ainsi le maintien d'une pellicule de 35 mm de largeur, encore appelée "pellicule 35 mm" ou "pellicule 24 x 36". Dans cette forme de réalisation, les picots et perforations des demi-caches servent également à leur solidarisation.

Selon l'invention, également, les côtés ou bords 27, 28, 29, 31, au lieu d'être perpendiculaires aux faces 42 et 43, respectivement supérieure et inférieure du demi-cache 22, forment avec lesdites faces un certain angle, de l'ordre de 30° de sorte que, l'arête 44 à l'intersection avec la face supérieure 42 recevant la pellicule délimite sur celle-ci une surface projetée déterminée avec précision.

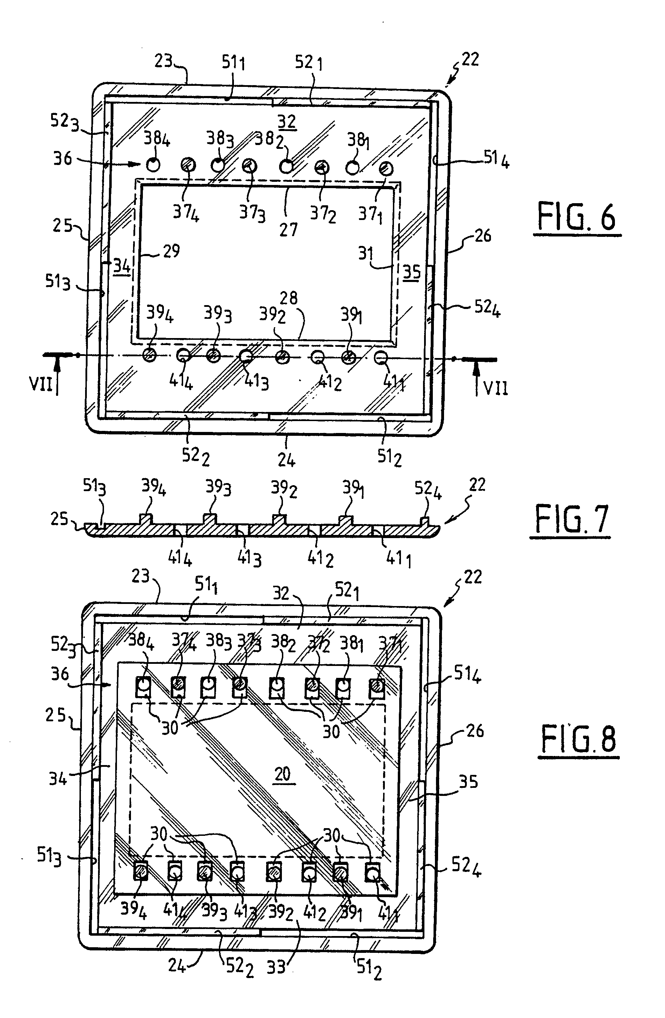

On se réfère maintenant aux figures 6 à 8 relatives à une autre forme de réalisation. Dans cette forme de réalisation, le demi-cache 22 est sensiblement identique au demi-cache 22 de la figure 1. La seule différence réside dans le fait qu'il comporte des moyens distincts pour permettre la solidarisation du demi-cache 22 à un autre demi-cache rigoureusement identique.

Comme montré à la figure 6, le demi-cache 22 comprend à proximité du côté 23 une rainure 51-1 qui s'étend sur sensiblement la moitié dudit côté et une nervure 52-1 qui s'étend sensiblement sur l'autre moitié dudit côté et dans le prolongement de la rainure.

De façon correspondante, le côté 24 comprend une rainure 51-2 prolongée par une nervure 52-2, le côté 25 une rainure 51-3 prolongée par une nervure 52-3 et le côté 26 une rainure 51-4 prolongée par une nervure 52-4.

Ces rainures et nervures qui sont disposées à proximité de la périphérie du demi-cache sont destinées à s'emboîter dans les rainures et nervures que comporte l'autre demi-cache, pour assurer leur immobilisation mutuelle.

Dans la forme de réalisation des figures 6 à 8, les picots 37, 39 et perforations 38, 41 sont situés suivant le même emplacement que celui des picots et perforations du demi-cache de la figure 1. Toutefois, comme ces picots et perforations servent uniquement au maintien de la pellicule, il n'est pas nécessaire quils coopèrent par emboîtement à force lors du rapprochement des deux demi-caches.

La figure 8 montre comment les picots 37 et 39 du demi-cadre 22 traversent une partie des perforations 30 de la pellicule 20. Les autres perforations de la pellicule se trouvent en regard des perforations 38 et 41 du demi-cache 22 de manière à recevoir les picots de l'autre demi-cache (non représenté).

Bien entendu, la solidarisation des deux demi-caches pourrait être assurée par d'autres moyens que ceux représentés aux figures 6 à 8.

Bien que l'invention ait été décrite avec référence particulière à une pellicule possédant deux rangées de perforations, elle peut s'appliquer à une pellicule possédant quatre rangées de perforations respectivement sur ses quatre bords.

## Revendications

1. - Dispositif de maintien d'une pellicule (20) porteuse d'une image à projeter comportant une rangée de perforations (30) sur chacun d'au moins deux bords opposés, caractérisé en ce qu'il comprend deux demi-caches périphériques (21, 22) entre lesquels est immobilisée la pellicule (20) par pénétration de saillies (37, 39) et cavités (38, 41) conjuguées que présentent les demi-caches, lesdites saillies (37, 39) et cavités (38, 41) étant disposées en correspondance des perforations (30) de la pellicule (20) pour que lesdites saillies (37, 39) pénètrent dans lesdites perforations (30) et maintiennent ainsi la pellicule (20) sur ses bords.

2. - Dispositif selon la revendication 1, caractérisé en ce que les saillies (37, 39) sont des picots circulaires.

3. - Dispositif selon la revendication 1, caractérisé en ce que les cavités (38, 41) sont des perforations circulaires.

4. - Dispositif selon l'une des revendications 1 à 3, caractérisé en ce qu'il comprend des moyens de solidarisation des deux demi-caches (21, 22).

5. - Dispositif selon la revendication 4, caractérisé en ce que les saillies (37, 39) et cavités (38, 41) assurent également la solidarisation des deux demi-caches (21, 22).

6. - Dispositif selon la revendication 4, caractérisé en ce que les moyens de solidarisation des deux demi-caches (21, 22) sont distincts des saillies (37, 39) et cavités (38, 41) et comprennent des nervures (52-1 - 52-4) et rainures (51-1 - 51-4) conjuguées que présentent les deux demi-caches (21, 22).

7. - Dispositif selon l'une des revendications précédentes, caractérisé en ce que chaque demi-cache (21, 22) a une configuration de cadre rectangulaire.

8. - Dispositif selon la revendication 7, caractérisé en ce que le contour interne du cadre forme un biseau.

9. - Demi-cache faisant partie d'un dispositif selon l'une des revendications 1 à 8.

10. - Appareil de projection comprenant un dispositif de maintien de pellicule selon l'une des revendications 1 à 8.

FIG.1

FIG.2

FIG.3

FIG.4

FIG.5

FIG. 6

FIG.7

FIG.8